# EUROPÄISCHE PATENTSCHRIFT

(11) **EP 0 796 557 B1**
(45) Veröffentlichungstag und Bekanntmachung des Hinweises auf die Patenterteilung: **09.08.2000**
(21) Anmeldenummer: 97103959.9
(22) Anmeldetag: 10.03.1997
(51) Int. Cl.: A01N 43/50

(54) **Mikrobicides Mittel**
Microbicidal agent
Agent microbicide

(30) Priorität: 21.03.1996 DE 19611155
(43) Veröffentlichungstag der Anmeldung: 24.09.1997
(73) Patentinhaber: Goldschmidt AG, 45127 Essen (DE)
(72) Erfinder: Hilmes, Wilfried, 45326 Essen (DE); Müller, Felix, Dr., 45277 Essen (DE); Neil, Thomas, Birkenhead, Merseyside, L42 6QA (GB); Schramm, Herbert, 45289 Essen (DE)

(56) Entgegenhaltungen:
- EP-A- 0 038 416
- EP-A- 0 551 975
- DE-A- 2 510 525
- DE-A- 4 321 566
- FR-A- 2 602 955
- DATABASE WPI Section Ch, Week 7909 Derwent Publications Ltd., London, GB; Class C02, AN 79-16898B XP002033391 & JP 54 008 723 A (MITSUBISHI GAS CHEM IND CO LTD) , 23.Januar 1979
- DATABASE WPI Section Ch, Week 7740 Derwent Publications Ltd., London, GB; Class A60, AN 77-71821Y XP002033392 & JP 52 102 426 A (OSAKA CITY) , 27.August 1977

## Beschreibung

Die Erfindung betrifft ein mikrobicides Mittel, enthaltend eine Wirkstoffkombination aus 1,3-Di-n-alkyl-2-alkyl-imidazoliumchloriden oder -bromiden und Alkylaminen.

Die DE-PS 25 10 525 betrifft quartäre Imidazoliumsalze der allgemeinen Formel 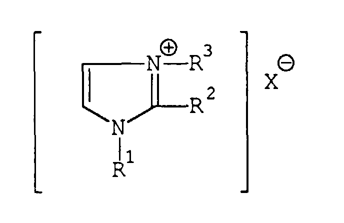 in der
- R¹: einen geradkettigen Alkylrest mit 8 bis 18 Kohlenstoffatomen,
- R²: einen geradkettigen Alkylrest mit 1 bis 3 Kohlenstoffatomen,
- R³: einen geradkettigen Alkylrest mit 8 bis 16 Kohlenstoffatomen und
- X: ein Chlor- oder Bromatom bedeutet,
sowie deren Herstellung.

Die vorgenannte Patentschrift betrifft weiterhin eine mikrobicide Zubereitung, bestehend aus einer oder mehreren Verbindungen der vorgenannten Formel und üblichen Konfektionierungsmitteln.

In der genannten DE-PS 25 10 525 ist ausgeführt, daß die dort beanspruchten Verbindungen in überraschender Weise hochwirksam gegen Bakterien, Pilze und Hefen sind. Die Verbindungen sind wasserlöslich und lassen sich dabei in üblicher Weise konfektionieren. Unter Konfektionieren versteht man dabei die Herstellung von anwendungsgerechten Zubereitungen, z. B. die Herstellung wäßriger Lösungen der erfindungsgemäßen Verbindungen in konzentrierter oder anwendungstypischer Konzentration. Die Konfektionierung umfaßt dabei auch die Einstellung eines bestimmten, dem Anwendungszweck entsprechenden pH-Wertes, eventuell die Zugabe von kationischen oder nichtionogenen, bekannten, oberflächenaktiven Substanzen, um die Grenzflächenspannung der Lösung herabzusetzen und/oder ihre Reinigungswirkung zu erhöhen, gegebenenfalls die Färbung und/oder Parfümierung der Zubereitung. Eine andere Form der Konfektionierung besteht in der Herstellung eines trockenen Produktes, indem man die kristalline Reinsubstanz verwendet oder die Reinsubstanz mit insbesondere anorganischen inerten Trägerstoffen vermischt. Neuerdings gewinnt auch die Auflösung der Wirksubstanzen in niedrigsiedenden Lösungsmitteln und die Versprühung dieser Lösungen der Wirksubstanzen durch aufgepreßten Stickstoff an Bedeutung. Diese Zubereitungsformen werden als Aerosole auf den Markt gebracht.

Wie oben ausgeführt, können den Verbindungen kationaktive oder nichtionogene, oberflächenaktive Substanzen zugesetzt werden. Geeignete kationaktive Verbindungen sind z. B. quaternäre Ammoniumverbindungen, wie etwa Cetylpyridiniumchlorid und Dialkyldimethylammoniumchlorid oder die Vielzahl der bekannten Benzalkoniumchloride. Als nichtionogene Verbindungen können an sich bekannte Anlagerungsprodukte von Ethylenoxid an Verbindungen mit acidem Wasserstoff, insbesondere an Alkohole einer Kettenlänge von 8 bis 18 Kohlenstoffatomen, verwendet werden.

Der für die Anwendung geeignete pH-Wert liegt in schwach saurem bis neutralem Bereich und erstreckt sich etwa von 4 bis 8. Zum Einstellen des gewünschten pH-Wertes verwendet man zweckmäßig schwach organische Säuren, vorzugsweise Essigsäure. Geeignet sind jedoch auch mehrfunktionelle Säuren, wie z. B. Zitronensäure oder Milchsäure.

Höhere Werte als pH 8 sind in wäßriger Lösung mit den Imidazoliumsalzen nicht erreichbar, weil es zu Ausfällungen durch die Bildung der freien Base kommt.

Grundsätzlich wird bei mikrobiciden Mitteln angestrebt, daß sie über einen breiten pH-Wertbereich wirksam sind und ihre biocide Wirkung gegenüber möglichst vielen Mikroorganismen entfalten. Dabei sollten gleichzeitig die Einsatzkonzentrationen, bei denen sie nicht nur hemmend, sondern abtötend wirken, möglichst gering sein. Ein dahingehend verbessertes mikrobicides Mittel wird durch die erfindungsgemäße Wirkstoffkombination bereitgestellt.

Gegenstand der Erfindung ist demnach ein mikrobicides Mittel, enthaltend eine Wirkstoffkombination aus
a) quartären Imidazoliumsalzen der allgemeinen Formel 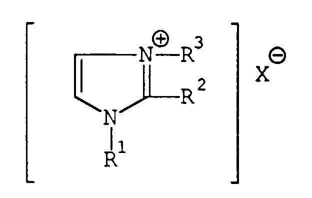 in der
   - R¹: einen geradkettigen Alkylrest mit 8 bis 18 Kohlenstoffatomen,
   - R²: einen geradkettigen Alkylrest mit 1 bis 3 Kohlenstoffatomen,
   - R³: einen geradkettigen Alkylrest mit 8 bis 16 Kohlenstoffatomen und
   - X: ein Chlor- oder Bromatom bedeutet,
   und
b) primären, sekundären oder tertiären Aminen der allgemeinen Formel 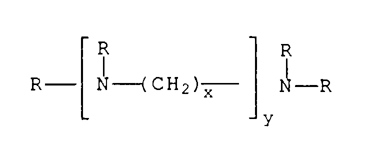 wobei
   - R =: C₈H₁₇ bis C₁₈H₃₇ oder H,
   - x =: 1 bis 4 und
   - y =: 0 bis 4 ist,
in wäßriger Lösung.

Bevorzugt als Wirkstoffe sind dabei 1,3-Di-n-decyl-2-methylimidazoliumchlorid und Alkylpropylendiamine. Die Wirkstoffe sind in einem Verhältnisbereich von 20 : 80 bis 80 : 20 gut miteinander mischbar. Bevorzugt ist ein Einsatzverhältnis von 55 bis 65 Gew.-Teilen für die Imidazoliumkomponente und 35 bis 45 Gew.-Teilen für die Aminkomponente.

Die bevorzugte Einsatzkonzentration der Wirkstoffkombination liegt im Bereich von 2 bis 50 Gew.-%.

Das mikrobicide Mittel hat überdies den Vorteil, daß die Aminkomponente in höheren Mengen in der erfindungsgemäßen Kombination eingesetzt werden kann. Mikrobicide Mittel auf Aminbasis sind aufgrund der geringen Wasserlöslichkeit dagegen auf Einsatzkonzentrationen von etwa 2 % beschränkt.

Die Zubereitung/Herstellung der nachstehenden Beispiele erfolgt in einer üblichen Rührapparatur, in der die Komponenten in der angegebenen Reihenfolge miteinander vermischt werden.

### Beispiel 1:

Wasser
5 % 1,3-Di-n-decyl-2-methyl-imidazoliumchlorid [IM]
5 % Alkylpropylendiamin [APDA]

### Beispiel 2:

Wasser
6 % IM
4 % APDA

### Beispiel 3:

Wasser
7 % IM
3 % APDA

Zur schnelleren Umsetzung/Löslichkeit kann die Mischungstemperatur auf bis zu 50 °C erhöht werden, insbesondere bei der Herstellung der höherkonzentrierten Abmischung bis zu 50 % Wirkstoff.

Die in den Beispielen 1 bis 3 erhaltenen klaren Lösungen können mit Hilfe geeigneter Säuren oder Basen auf den gewünschten pH-Wert eingestellt werden, pH-Bereich 0 bis 13.

### Vergleichszubereitung:

Wasser
10 % APDA

Es handelt sich um eine hochviskose, teilweise pastöse Flüssigkeit, aus der erst nach Zugabe einer organischen bzw. anorganischen Säure eine klare, dünnflüssige Lösung entsteht.

Wasser
10 % IM

Will man diese klare Lösung mit einer Base auf einen pH-Wert von 9 einstellen, kommt es zu einer Ausflockung bedingt durch die Bildung der freien Base des IM.

Die Wirksamkeit der erfindungsgemäßen Mittel ist in den folgenden Tabellen dargestellt.

Die Abprüfung erfolgte dabei nach den Richtlinien der DVG (Deutsche Veterinärmedizinische Gesellschaft) zur Prüfung chemischer Desinfektionsmittel. Die pH-Wert-Einstellung (angegeben ist jeweils der Wert für eine 1 %ige Lösung) erfolgt in üblicher Weise durch Zugabe von Alkalilaugen und anorganischen bzw. organischen Säuren.

In den Tabellen sind die ersten fünf Mikroorganismen in den DVG-Richtlinien vorgeschrieben. Zusätzlich sind als Testorganismen Escherichia coli sowie das insbesondere bei höheren pH-Werten schwer abzutötende Bakterium Alcaligenes xylosoxidans angegeben. Als Testpilze dienen Aspergillus niger, der insbesondere im Sanitärbereich Probleme bereitet und äußerst schwer zu bekämpfen ist, sowie der in der DVG vorgeschriebene Testorganismus Candida albicans. Die Werte in den Tabellen bezeichnen jeweils die Menge Wirkstoff (in ppm), bei denen die Testorganismen bei 15 Minuten Einwirkzeit in WSH (Wasser standardisierter Härte) reproduzierbar abgetötet werden.

Die Tabellen 1 bis 3 zeigen jeweils unterschiedliche Einsatzverhältnisse, gemessen bei verschiedenen pH-Werten.

Die Tabellen 1 bis 3 zeigen, daß bei jeweils gleichem Wirkstoffanteil der Grundlösung bei pH-Werten um 9 die besten mikrobiologischen Ergebnisse erzielt werden.

Somit stellt der pH-Bereich 9 unabhängig von der Wirkstoffkombination ein Optimum dar.

Überraschend ist auch die gute Wirksamkeit gegenüber Pseudomonas aeruginosa über den getesteten pH-Bereich 5 bis 9.

In Tabelle 4 werden die Wirkstoffe als Reinsubstanzen mit unterschiedlichen Anteilen bei einem pH-Wert um 9 gegenübergestellt. Dabei wird die IM-Komponente bei dem höchst erreichbaren pH-Wert von 8,1 gemessen. Erkennbar ist, daß die Wirksamkeit des erfindungsgemäßen Wirkstoffgemisches bei deutlich geringeren Einsatzkonzentrationen als bei denen der Ausgangswirkstoffe liegt. Besonders hervorzuheben ist dabei der Wert für Alcaligenes xylosoxidans sowie den ebenfalls bei hohen pH-Werten schwer zu bekämpfenden Pseudomonas aeruginosa. Eine deutlich gesteigerte Wirksamkeit liegt auch gegenüber den Pilzen, insbesondere Aspergillus niger, vor.

**Tabelle 1**

| | Wirkstoffe | | |
|---|---|---|---|
| Teststämme | 5 % IM / 5 % APDA pH 9,15 | 5 % IM / 5 % APDA pH 6,85 | 5 % IM / 5 % APDA pH 4,9 |
| Pseudomonas aeruginosa | 250 | 250 | 250 |
| Proteus mirabilis | 250 | 500 | 1000 |
| Staphylococcus aureus | 63 | 63 | 125 |
| Enterococcus faecium | 63 | 31 | 31 |
| Candida albicans | 63 | n.b. | n.b. |
| Aspergillus niger | > 8000 | n.b. | > 8000 |
| Escherichia coli | 125 | 250 | 250 |
| Alcaligenes xylosoxidans | 500 | 2000 | 500 |

**Tabelle 2**

| | Wirkstoffe | | |
|---|---|---|---|
| Teststämme | 6 % IM / 4 % APDA pH 9,2 | 6 % IM / 4 % APDA pH 6,8 | 6 % IM / 4 % APDA pH 5,0 |
| Pseudomonas aeruginosa | 250 | 250 | 250 |
| Proteus mirabilis | 125 | 250 | 1000 |
| Staphylococcus aureus | 63 | 63 | 125 |
| Enterococcus faecium | 16 | 31 | 31 |
| Candida albicans | 50 | n.b. | n.b. |
| Aspergillus niger | 4000 | n.b. | n.b. |
| Escherichia coli | 125 | 250 | 250 |
| Alcaligenes xylosoxidans | 125 | 1000 | 250 |

**Tabelle 3**

| | Wirkstoffe | | |
|---|---|---|---|
| Teststämme | 7 % IM / 3 % APDA pH 9,1 | 7 % IM / 3 % APDA pH 7,2 | 7 % IM / 3 % APDA pH 5,2 |
| Pseudomonas aeruginosa | 500 | 500 | 250 |
| Proteus mirabilis | 250 | 1000 | 1250 |
| Staphylococcus aureus | 63 | 63 | 125 |
| Enterococcus faecium | 31 | 31 | 63 |
| Candida albicans | 63 | 125 | 500 |
| Aspergillus niger | > 8000 | > 8000 | > 8000 |
| Escherichia coli | 125 | 250 | 580 |
| Alcaligenes xylosoxidans | 500 | 2000 | 1000 |

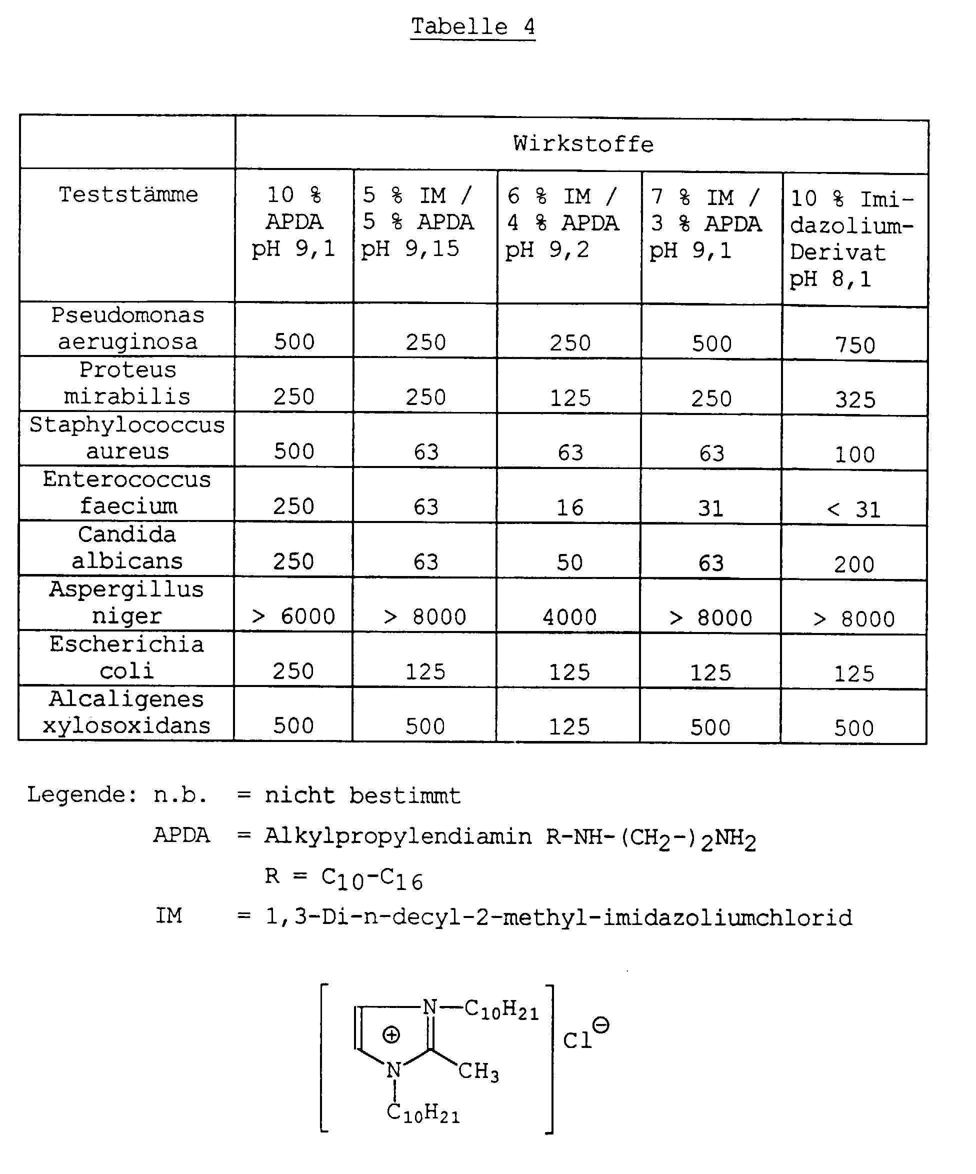

## Patentansprüche

1. Mikrobicides Mittel, enthaltend eine Wirkstoffkombination aus
a) quartären Imidazoliumsalzen der allgemeinen Formel 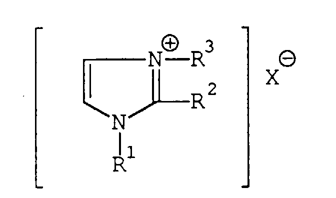 in der
R¹ einen geradkettigen Alkylrest mit 8 bis 18 Kohlenstoffatomen,
R² einen geradkettigen Alkylrest mit 1 bis 3 Kohlenstoffatomen,
R³ einen geradkettigen Alkylrest mit 8 bis 16 Kohlenstoffatomen und
X ein Chlor- oder Bromatom bedeutet,
und
b) primären, sekundären oder tertiären Aminen der allgemeinen Formel 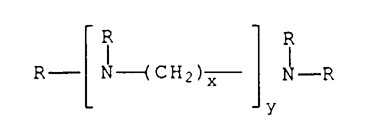 wobei
R = C₈H₁₇ bis C₁₈H₃₇ oder H,
x = 1 bis 4 und
y = 0 bis 4 ist,
in wäßriger Lösung.

2. Mikrobicides Mittel gemäß Anspruch 1, enthaltend als Wirkstoffe 55 bis 65 Gew.-Teile 1,3-Di-n-decyl-2-methyl-imidazoliumchlorid und 35 bis 45 Gew.-Teile Alkylpropylendiamine mit 8 bis 16 C-Atomen.

3. Mikrobicides Mittel gemäß Anspruch 2 mit einer Wirkstoffkonzentration von 2 bis 50 Gew.-%.

## Claims

1. Microbicidal agent comprising an active compound combination of
a) quaternary imidazolium salts of the general formula 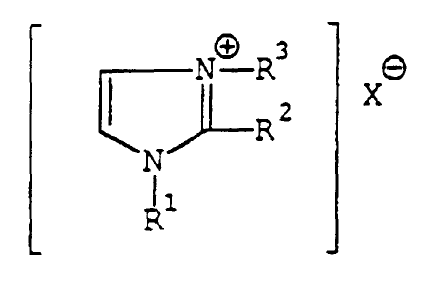 where
R¹ is an unbranched alkyl radical having 8 to 18 carbon atoms,
R² is an unbranched alkyl radical having 1 to 3 carbon atoms,
R³ is an unbranched alkyl radical having 8 to 16 carbon atoms and
X is chlorine or bromine,
and
b) primary, secondary or tertiary amines of the general formula 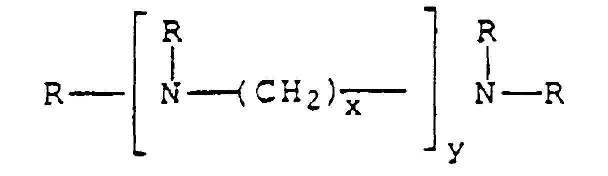 where
R = C₈H₁₇ to C₁₈H₃₇ or H,
x = 1 to 4 and
y = 0 to 4
in aqueous solution.

2. Microbicidal agent according to Claim 1 comprising, as active compounds, from 55 to 65 parts by weight of 1,3-di-n-decyl-2-methylimidazolium chloride and from 35 to 45 parts by weight of alkylpropylenediamines having from 8 to 16 carbon atoms.

3. Microbicidal agent according to Claim 2 having an active compound concentration of from 2 to 50% by weight.

## Revendications

1. Agent microbicide, contenant une combinaison de substances actives constituée :
a) de sels d'imidazolium quaternaire de formule générale 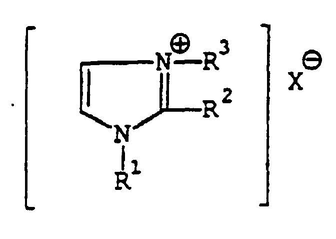 dans laquelle
R¹ signifie un radical alkyle linéaire avec 8 à 18 atomes de carbone;
R² signifie un radical alkyle linéaire avec 1 à 3 atomes de carbone;
R³ signifie un radical alkyle linéaire avec 8 à 16 atomes de carbone, et
X signifie un atome de chlore ou de brome,
et
b) d'amines primaires, secondaires ou tertiaires de formule générale 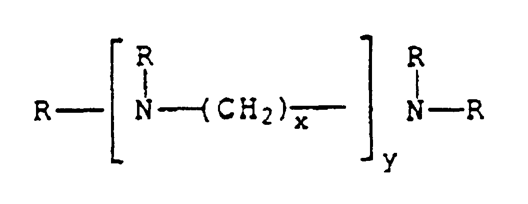 dans laquelle
R = C₈H₁₇ à C₁₈H₃₇ ou H;
x = 1 à 4, et
y = 0 à 4,
en solution aqueuse.

2. Agent microbicide suivant la revendication 1, contenant, comme substances actives, 55 à 65 parties en poids de chlorure de 1,3-di-n(décyl)2-méthylimidazolium et 35 à 45 parties en poids d'alkylpropylènediamine avec 8 à 16 atomes de carbone.

3. Agent microbicide suivant la revendication 2, avec une concentration en substances actives de 2 à 50% en poids.
